(19) Europäisches Patentamt
European Patent Office
Office européen des brevets

(11) **EP 2 941 557 B1**

(12) **EUROPÄISCHE PATENTSCHRIFT**

(45) Veröffentlichungstag und Bekanntmachung des Hinweises auf die Patenterteilung:
**10.07.2019   Patentblatt 2019/28**

(21) Anmeldenummer: **13811799.9**

(22) Anmeldetag: **19.12.2013**

(51) Int Cl.:
*F02D 41/40* *(2006.01)*       *F02D 41/04* *(2006.01)*
*F02D 41/14* *(2006.01)*

(86) Internationale Anmeldenummer:
**PCT/EP2013/003869**

(87) Internationale Veröffentlichungsnummer:
**WO 2014/106531 (10.07.2014 Gazette 2014/28)**

(54) **VERFAHREN ZUM BETREIBEN EINER BRENNKRAFTMASCHINE**

METHOD FOR OPERATING AN INTERNAL COMBUSTION ENGINE

PROCÉDÉ POUR FAIRE FONCTIONNER UN MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.01.2013   DE 102013000061**

(43) Veröffentlichungstag der Anmeldung:
**11.11.2015   Patentblatt 2015/46**

(73) Patentinhaber: **MTU Friedrichshafen GmbH**
**88045 Friedrichshafen (DE)**

(72) Erfinder: **DÖLKER, Armin**
**88048 Friedrichshafen (DE)**

(56) Entgegenhaltungen:
**EP-A1- 0 259 544       WO-A1-88/02811**
**DE-B3-102004 008 261   US-A1- 2012 042 850**

## Beschreibung

Die Erfindung betrifft ein Verfahren zum Betreiben einer Brennkraftmaschine und eine Anordnung zur Durchführung des Verfahrens.

In Brennkraftmaschinen werden unterschiedliche Einspritzsysteme verwendet. So wird mit Common-Rail-Einspritzung eine Speichereinspritzung bezeichnet, bei der eine Hochdruckpumpe Kraftstoff auf ein hohes Druckniveau bringt. Der Kraftstoff gelangt in ein Rohrleitungssystem, das Rail, in dem dieser unter Druck steht. Das Common-Rail-System ermöglicht die Trennung der Druckerzeugung vom eigentlichen Einspritzvorgang.

Die Brennkraftmaschine kann sich grundsätzlich in einem Stationärbetrieb oder in einem Transientbetrieb befinden. Im stationären Betrieb bzw. Zustand sind die Drehzahl wie auch der Raildruck eingeschwungen. Im transienten Betrieb ist dies nicht der Fall.

Beim Betreiben einer Brennkraftmaschine muss bei der Abstimmung des Motors auch der Spritzbeginn festgelegt werden. Bislang wird der Spritzbeginn entweder überhaupt nicht oder mittels eines PT1-Filters gefiltert. Die Zeitkonstante dieses PT1-Filters ist dabei konstant. Um ein gutes stationäres Verhalten zu ermöglichen, muss diese Zeitkonstante sehr groß eingestellt werden. Dies hat den Nachteil, dass der Spritzbeginn bei transienten Vorgängen zu stark verzögert wird. Aus US 2012/0042850 A1 ist ein Filter erster Ordnung mit veränderlicher Zeitkonstante bekannt.

Vor diesem Hintergrund wird ein Verfahren nach Anspruch 1 vorgestellt.

Das Verfahren dient zum Betreiben einer Brennkraftmaschine, bei dem ein Spritzbeginn ausgehend von einem Normspritzbeginn durch ein erstes und ein zweites Filter berechnet wird, deren Filterparameter abhängig vom Betriebszustand der Brennkraftmaschine gewählt werden.

Der Filterparameter des ersten Filters wird in Abhängigkeit eines transienten Luftmassenverhältnisses berechnet.

Als Filterparameter des ersten Filters kann eine Filterzeitkonstante oder ein Filterwinkel verwendet werden.

Der Filterparameter wird typischerweise so eingestellt, dass sich für einen Transientbetrieb ein geringes Verzögerungsverhalten und für einen Stationärbetrieb ein starkes Verzögerungsverhalten ergibt.

Es ist folglich bei dem Verfahren zum Betreiben einer Brennkraftmaschine, bei dem ein Spritzbeginn ausgehend von einem Normspritzbeginn berechnet wird, vorgesehen, dass diese Berechnung durch zwei Filter vorgenommen wird, deren Filterparameter abhängig vom Betriebszustand der Brennkraftmaschine gewählt werden.

Entsprechend wird auch eine nicht zur Erfindung gehörende Anordnung zur Durchführung des Verfahrens beschrieben. Diese Anordnung dient zum Betreiben einer Brennkraftmaschine, wobei die Anordnung dazu ausgelegt ist, einen Spritzbeginn ausgehend von einem Normspritzbeginn durch ein Filter zu berechnen, dessen Filterparameter abhängig vom Betriebszustand der Brennkraftmaschine gewählt wird.

Es wurde somit erkannt, dass im Stationärbetrieb, um Schwankungen des Spritzbeginns zu reduzieren, ein Spritzbeginnfilter mit großer Verzögerungszeit benötigt wird. Im Transientbetrieb hingegen wird ein Spritzbeginnfilter mit sehr kleiner Verzögerungszeit benötigt. Mit dem vorgestellten Verfahren werden nunmehr die Anforderungen für beide Betriebe erfüllt.

Das vorgestellte Verfahren ermöglicht somit ein gutes Filterverhalten im Stationärbetrieb, entweder mit großer Zeitkonstante oder großem Filterwinkel, und gleichzeitig eine geringe Filterung im Transientbetrieb, entweder mit kleiner Zeitkonstante oder kleinem Filterwinkel. Auf diese Weise werden steile Gradienten im Spritzbeginn-Kennfeld ermöglicht. Weiterhin werden im Transientbetrieb Emissionen reduziert und es wird das Beschleunigungsverhalten verbessert.

Weitere Vorteile und Ausgestaltungen der Erfindung ergeben sich aus der Beschreibung und den beiliegenden Zeichnungen.

Die Erfindung ist anhand von Ausführungsformen in der Zeichnung schematisch dargestellt und wird nachfolgend unter Bezugnahme auf die Zeichnung ausführlich beschrieben.

Figur 1      zeigt ein Verfahren zum Berechnen des Spritzbeginns.
Figur 2      zeigt die Berechnung des Normspritzbeginns.
Figur 3      zeigt die Berechnung des Normspritzbeginns mit Filter.
Figur 4      zeigt ein Spritzbeginnfilter.
Figur 5      zeigt ein Mittelwertfilter.
Figur 6      zeigt ein weiteres Mittelwertfilter.
Figur 7      zeigt ein Beispiel für ein Spritzbeginnfilter.
Figur 8      zeigt ein Verfahren zum Berechnen des Spritzbeginns.
Figur 9      zeigt ein Verfahren zum Berechnen des Spritzbeginns.

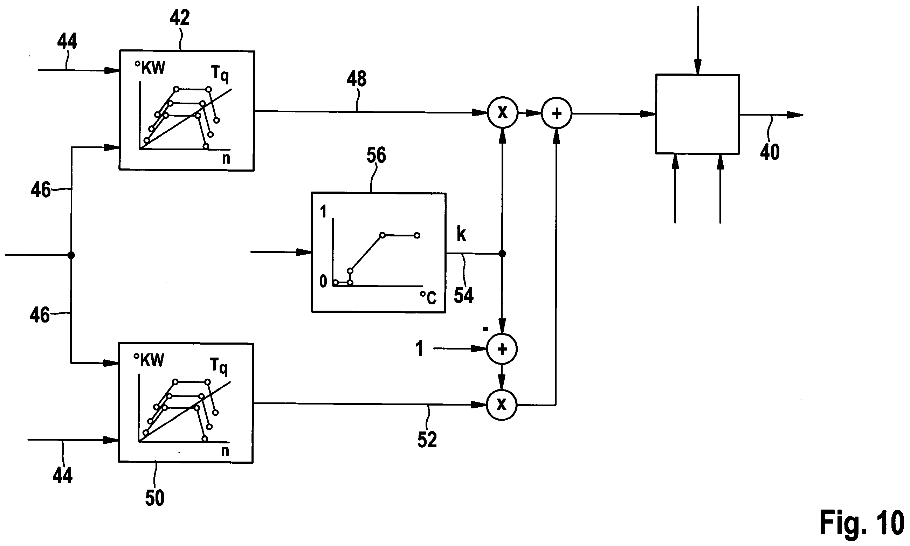

Figur 10     zeigt noch ein Verfahren zum Berechnen des Spritzbeginns.
Figur 11     zeigt eine Ausführung des beschriebenen Verfahrens.
Figur 12     zeigt noch eine weitere Ausführung des beschriebenen Verfahrens.
Figur 13     zeigt die Berechnung der dynamischen Zeitkonstanten.

Figur 14    zeigt die Berechnung des dynamischen Filterwinkels.

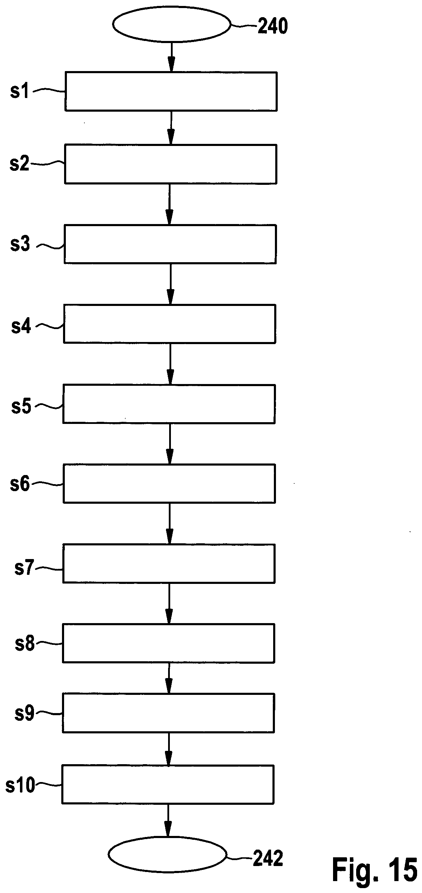

Figur 15    zeigt die Berechnung des Spritzbeginns in einem Flussdiagramm.
Figur 16    zeigt Zeitdiagramme.

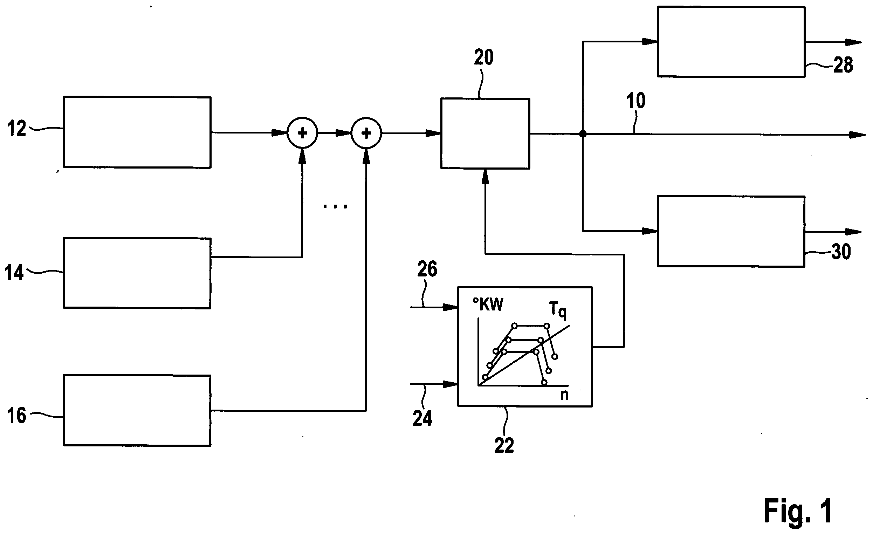

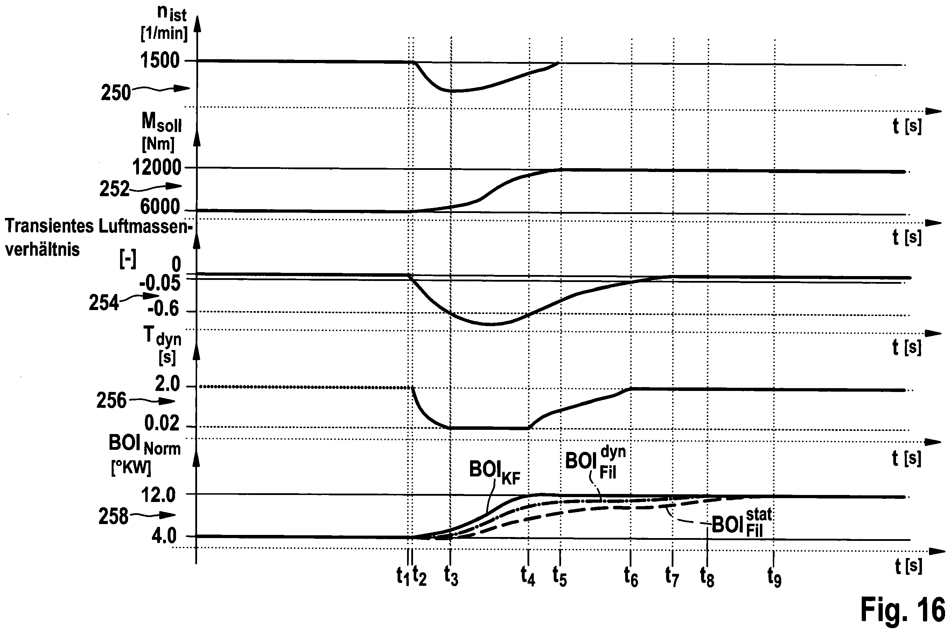

Figur 1 zeigt ein Übersichtsbild der Spritzbeginnberechnung. Der Spritzbeginn der Haupteinspritzung 10 wird ausgehend vom Normspritzbeginn 12 berechnet. Der Normspritzbeginn 12 wird in Abhängigkeit des Luftmassenverhältnisses 14, des Umgebungsluftdrucks 16 und weiterer Größen korrigiert. Die Korrekturgrößen werden bei dieser Ausführung dem Normspritzbeginn aufaddiert. Anschließend wird der Spritzbeginn auf einen Maximalwert 20 begrenzt. Dieser ist durch ein Kennfeld 22 mit den Eingangsgrößen Drehmoment 24 und Motordrehzahl 26 definiert. Der begrenzte Spritzbeginn stellt den Spritzbeginn der Haupteinspritzung 10 dar. Aus diesem werden der Spritzbeginn der Voreinspritzung 28 sowie der Nacheinspritzung 30 abgeleitet.
Die Berechnung des Luftmassenverhältnisses ist in Figur 16 dargestellt.

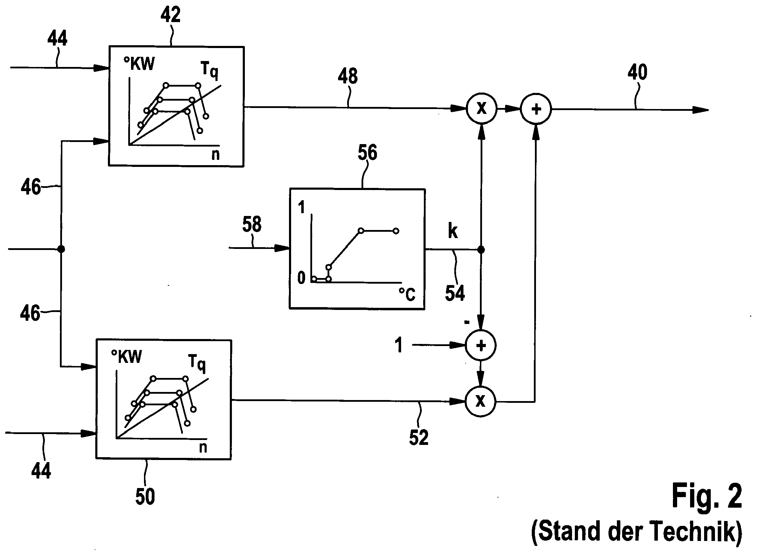

Figur 2 zeigt die Berechnung des Normspritzbeginns 40. Aus einem ersten Kennfeld 42 mit den Eingangsgrößen Motordrehzahl 44 und Sollmoment 46 wird der Spritzbeginn für den heißen Motor 48 ermittelt. Aus einem zweiten Kennfeld 50 mit denselben Eingangsgrößen wird der Spritzbeginn für den kalten Motor 52 berechnet. Mit Hilfe eines Gewichtungsfaktors k 54 wird zwischen den beiden Spritzbeginnen 48 und 52 gewichtet. Dieser Gewichtungsfaktor k 54 ist die Ausgangsgröße einer Kennlinie 56, die eine virtuelle Temperatur 58 als Eingangsgröße hat. Die virtuelle Temperatur 58 resultiert aus zwei Temperaturen, bspw. der Kühlwassertemperatur und der Ladelufttemperatur. Für den resultierenden Spritzbeginn gilt:

$$\text{Spritzbeginn} = k * (\text{BOI}_{\text{HotEngine}} \; [°\text{KW}]) + (1\text{-}k) * (\text{BOI}_{\text{ColdEngine}} \; [°\text{KW}])$$

wobei $\text{BOI}_{\text{HotEngine}}$ [°KW] gleich Spritzbeginn für den heißen Motor und $\text{BOI}_{\text{ColdEngine}}$ [°KW] Spritzbeginn für den kalten Motor ist, angegeben in der Einheit Grad Kurbelwinkel vor dem oberen Totpunkt.
Die Berechnung des Spritzbeginns in dieser Form ist in der Druckschrift US 7,293,556 B2 beschrieben.

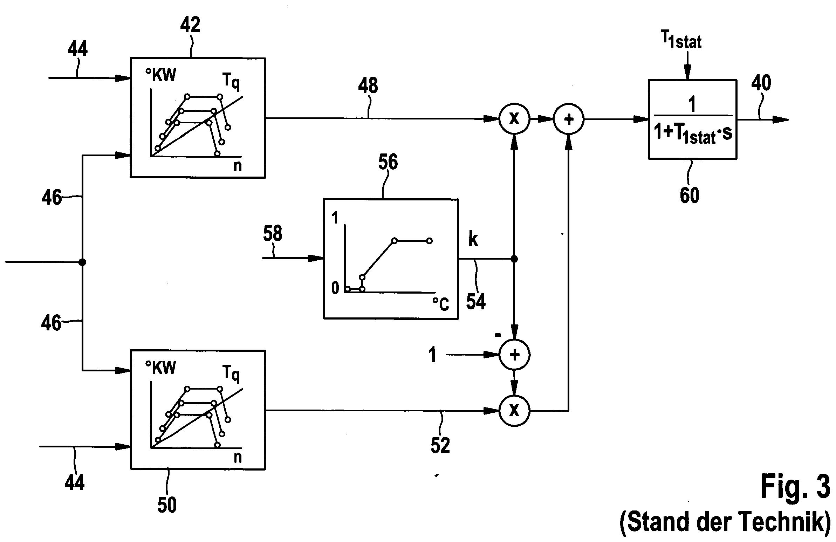

Figur 3 zeigt, dass der Spritzbeginn entsprechend dem Stand der Technik durch ein Filter 60 mit konstanter Filterzeitkonstanten gefiltert wird. Dargestellt ist ein PT1-Filter mit konstanter, statischer Filterzeitkonstanten $T_{1\text{stat}}$. Die Ausgangsgröße des Filters 60 stellt den Normspritzbeginn 40 dar.
Der Versuchsingenieur hat die Aufgabe, die beiden Spritzbeginnkennfelder 42 und 50 auszulegen. Dabei wird eine möglichst flexible Einstellung der Kennfelder 42 und 50 gewünscht. Das bedeutet, dass auch sehr steile Gradienten möglich sein sollten, ohne die Brennkraftmaschine bzw. den Motor in die Instabilität zu führen.
Steile Gradienten im Spritzbeginnkennfeld 42 bzw. 50 führen im Stationärbetrieb zu einem stark schwankenden Spritzbeginn vor dem Spritzbeginnfilter 60. Um diese Schwankungen zu dämpfen, muss die Zeitkonstante sehr groß gewählt werden. Dies wiederum führt dazu, dass der Spritzbeginn bei instationären Vorgängen stark verzögert wird, was negative Auswirkungen auf das Lastannahmeverhalten sowie das Emissionsverhalten des Motors haben kann.
In Verbindung mit dem vorgestellten Verfahren wurde nunmehr ein Spritzbeginnfilter entwickelt, das im Stationärbetrieb ein sehr starkes Verzögerungsverhalten und im Transientbetrieb nur ein geringes oder kein Verzögerungsverhalten hat. Dadurch wird der Versuchsingenieur in die Lage versetzt, die beiden Spritzbeginn-Kennfelder 42 bzw. 50 nahezu beliebig auszulegen, ohne Nachteile im Transientbetrieb in Kauf nehmen zu müssen. Zusätzlich können mit einem solchen Filter Emissionen reduziert werden, da der Spritzbeginn im Transientbetrieb ein besseres Übergangsverhalten, d. h. eine kürzere Reaktionszeit, hat.

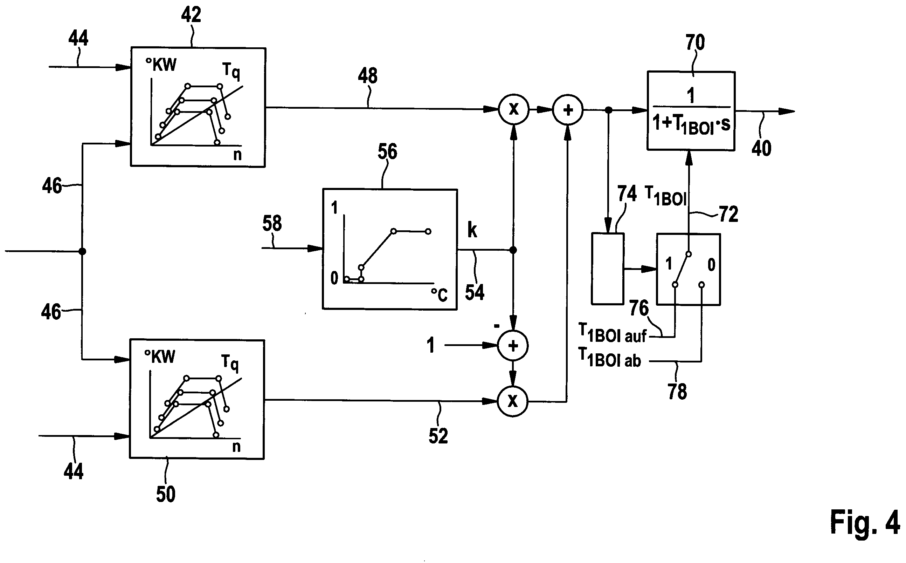

Figur 4 zeigt ein weiteres Spritzbeginnfilter. Bezugsziffern sind entsprechend Figur 3 vergeben. Bei dem Filter 70 der Figur 4 hängt die Zeitkonstante 72 vom Gradienten 74 des Spritzbeginns ab. Ist der Gradient des Spritzbeginns positiv, d. h. steigt der Spritzbeginn an, so ist die Zeitkonstante mit der Zeitkonstanten $T_{1\text{BOIup}}$ identisch. Ist der Gradient des Spritzbeginns negativ, d. h. nimmt der Spritzbeginn ab, so ist die Zeitkonstante mit der Zeitkonstanten $T_{1\text{BOIdown}}$ identisch.
Die Zeitkonstante kann also bei diesem Filter für ansteigenden und abnehmenden Spritzbeginn unterschiedlich eingestellt werden.
Um im Stationärbetrieb eine gute Filterwirkung zu haben, müssen allerdings auch bei diesem Filter für die Zeitkonstanten große Werte gewählt werden, wodurch der Spritzbeginn bei instationären Vorgängen wiederum stark verzögert wird.

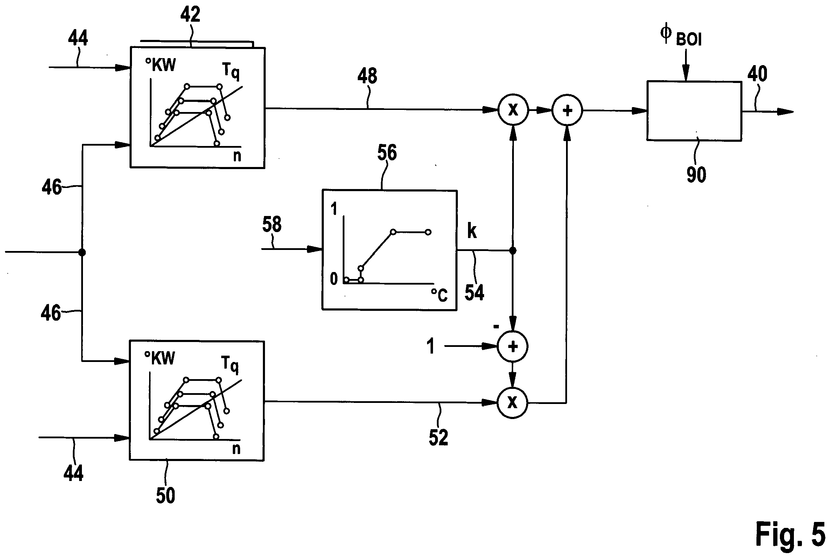

Figur 5 zeigt ein Spritzbeginnfilter 90, das den Spritzbeginn über einen konstanten Kurbelwellenwinkel $\Phi_{\text{BOI}}$ mittelt, d. h. ein Mittelwertfilter. Denkbar ist hier auch ein Filter, das den Spritzbeginn über eine konstante Zeit mittelt.

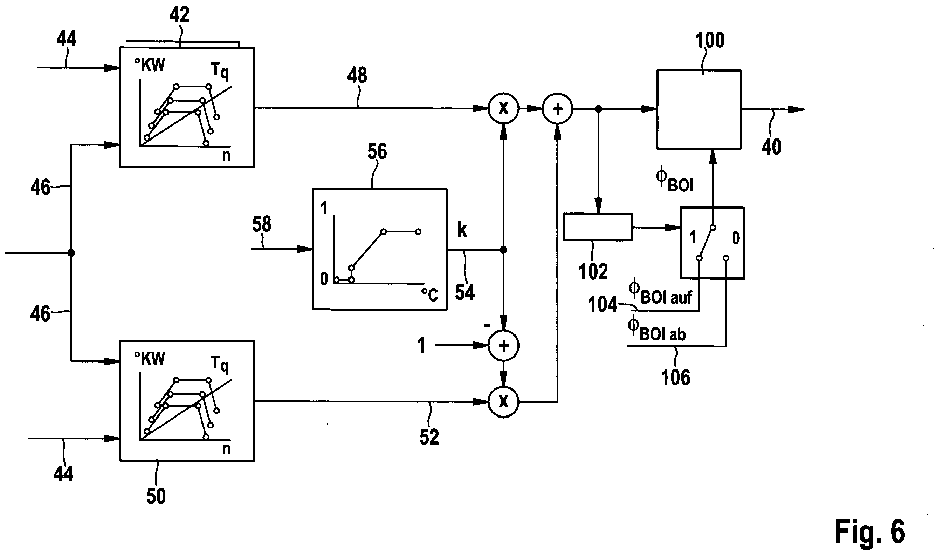

Figur 6 zeigt ein Mittelwertfilter 100, bei dem der Filterwinkel $\Phi_{\text{BOI}}$ in Abhängigkeit des Spritzbeginngradienten 102 berechnet wird. Bei ansteigendem Spritzbeginn nimmt der Filterwinkel den Wert 104 und bei abfallendem Spritzbeginn den weiteren Wert 106 an. Der Filterwinkel kann bei diesem Filter also für ansteigenden und abfallenden Spritzbeginn unterschiedlich eingestellt werden. Um im Stationärbetrieb eine gute Filterwirkung zu erzielen, müssen bei den Mittelwertfiltern 90 und 100 der Figuren 5 und 6 große Filterwinkel $\Phi_{BOI}$ gewählt werden. Dies führt auch bei diesen Filtern 90 und 100 dazu, dass der Spritzbeginn bei instationären Vorgängen stark verzögert wird, was wiederum negative Auswirkungen auf das Lastannahmeverhalten sowie das Emissionsverhalten des Motors haben kann.

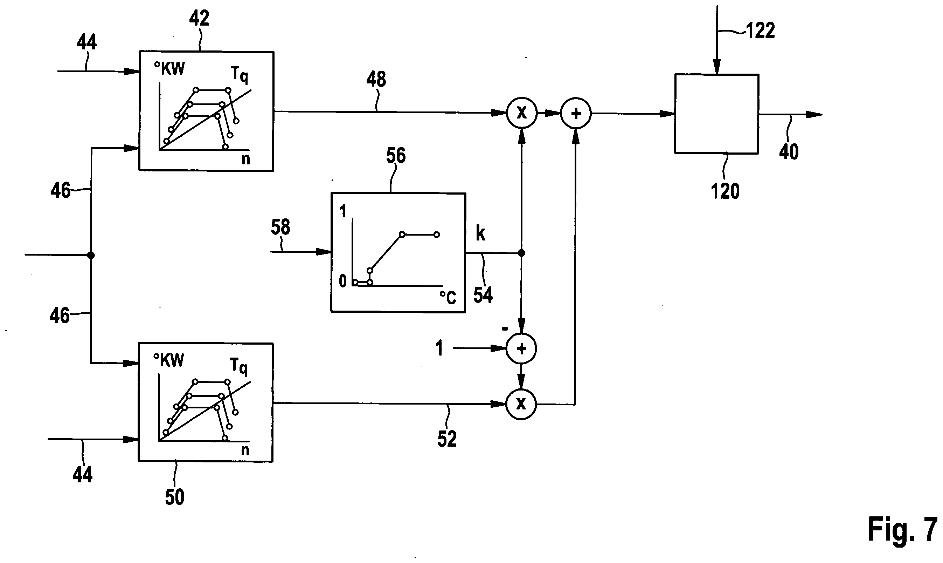

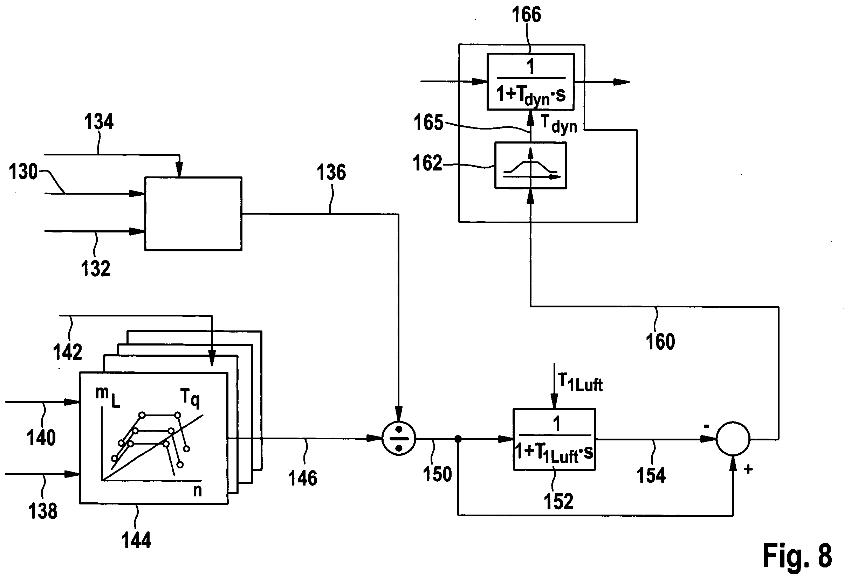

Figur 7 zeigt ein Beispiel für ein Spritzbeginnfilter 120 mit dem transienten Luftmassenverhältnis 122 als Eingangsgröße. Dieses Filter 120 ist in Figur 8 neben der Berechnung des transienten Luftmassenverhältnisses detaillierter dargestellt. Als Eingangssignal des Filters kann hierbei jedes Signal verwendet werden, welches eine Unterscheidung zwischen Stationär- und Transientbetrieb ermöglicht.

Aus dem Ladeluftdruck 130, der Ladelufttemperatur 132 und dem Zylindervolumen 134 wird die aktuelle Luftmasse 136 berechnet. Aus dem Motorsollmoment 138 und der Motordrehzahl 140 wird, je nach Laderschaltzustand 142, aus einem 3D-Kennfeld 144 die Normluftmasse 146 berechnet. Das aktuelle Luftmassenverhältnis 136 wird nun durch die Normluftmasse 146 dividiert, was das dimensionslose aktuelle Luftmassenverhältnis 150 ergibt. Dieses wird mit Hilfe eines PT1-Filters 152 gefiltert. Ausgangsgröße dieses Filters 152 ist das gefilterte Luftmassenverhältnis 154.

Das transiente Luftmassenverhältnis 160 ergibt sich als Differenz von aktuellem dimensionslosen Luftmassenverhältnis 150 und gefiltertem Luftmassenverhältnis 154.

Die Zeitkonstante $T_{dyn}$ 165 des Spritzbeginnfilters 166 wird nicht mehr konstant vorgegeben, sondern erfindungsgemäß über eine zweidimensionale Kurve 162 in Abhängigkeit des transienten Luftmassenverhältnisses 160 berechnet.

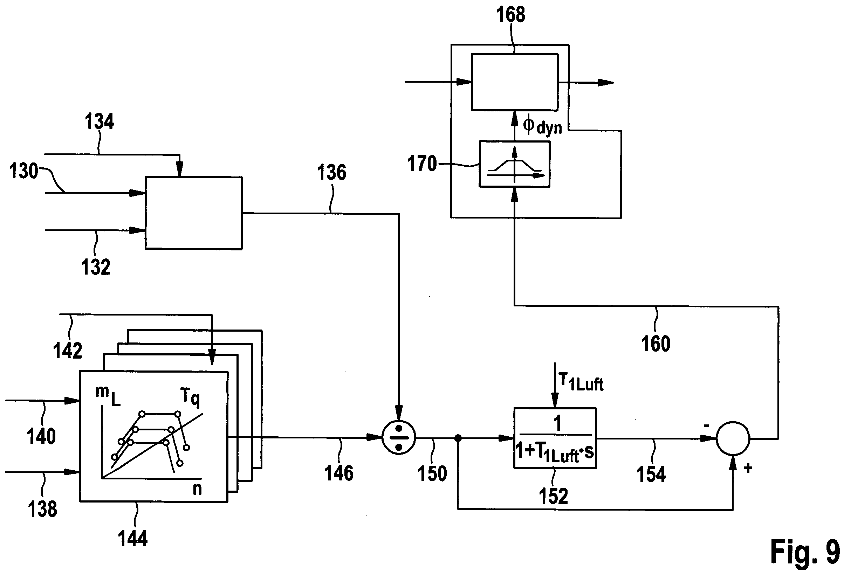

Figur 9 zeigt ein Beispiel für ein Mittelwertfilter 168, dessen Filterwinkel $\Phi_{dyn}$ ebenfalls über eine zweidimensionale Kurve 170 in Abhängigkeit des transien- - ten Luftmassenverhältnisses 160 berechnet wird.

Denkbar wäre auch ein Mittelwertfilter, das den Spritzbeginn über eine bestimmte Filterzeit $\Delta t_{dyn}$ mittelt, wobei diese Filterzeit wiederum über eine zweidimensionale Kurve in Abhängigkeit des transienten Luftmassenverhältnisses 160 berechnet wird.

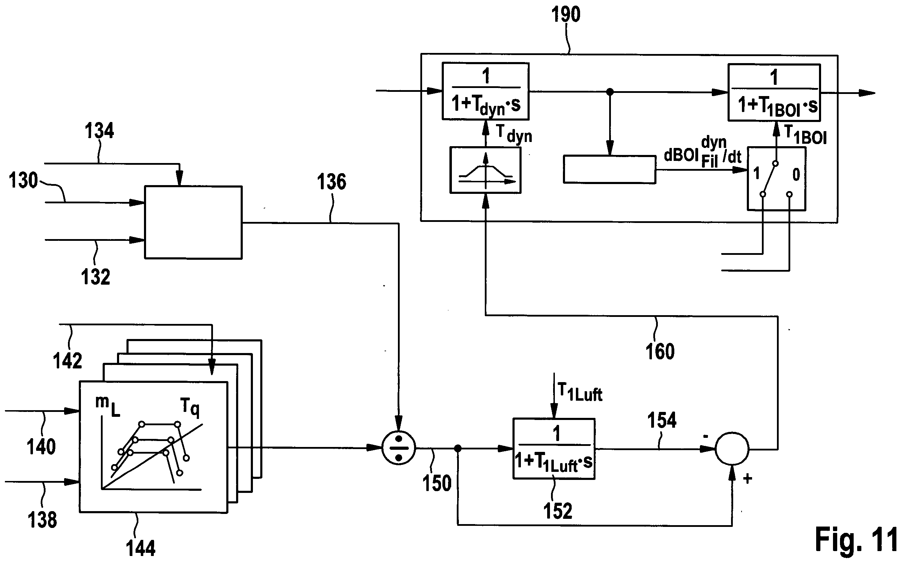

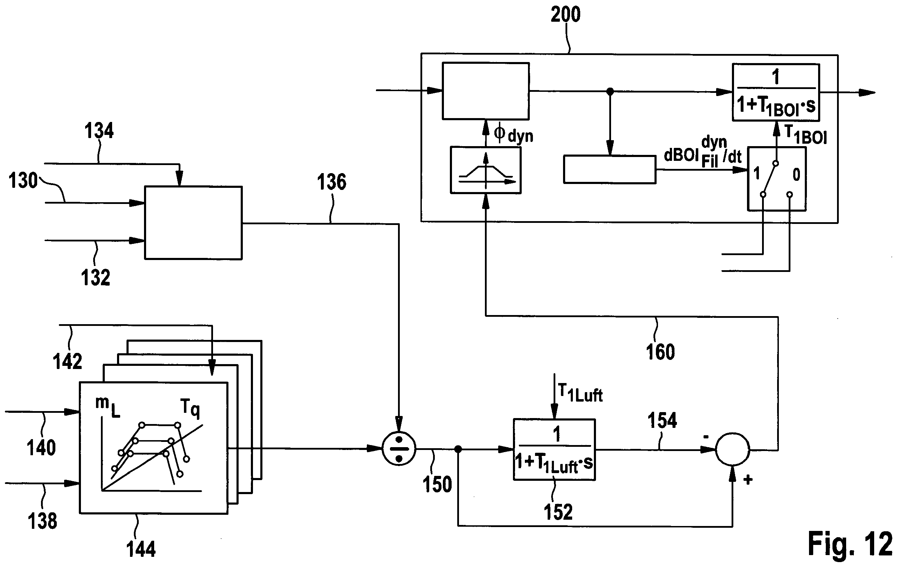

Figuren 11 und 12 zeigen Ausgestaltungen der Erfindung. Die in den Figuren 8 und 9 dargestellten Filter mit dynamischer Filterzeitkonstanten bzw. dynamischem Filterwinkel werden hier mit einem Filter mit Spritzbeginngradientenabhängiger Zeitkonstanten (vgl. Figur 4) kombiniert. Der Vorteil dieser Filter ist, dass der Spritzbeginn im Transientbetrieb je nach Wunsch des Versuchsingenieurs z. B. nur in eine Richtung, d. h. bei abfallendem oder ansteigendem Spritzbeginn verzögert werden kann und in der anderen Richtung unverzögert bleibt, oder es ist möglich, den Spritzbeginn in beide Richtungen unterschiedlich zu verzögern.

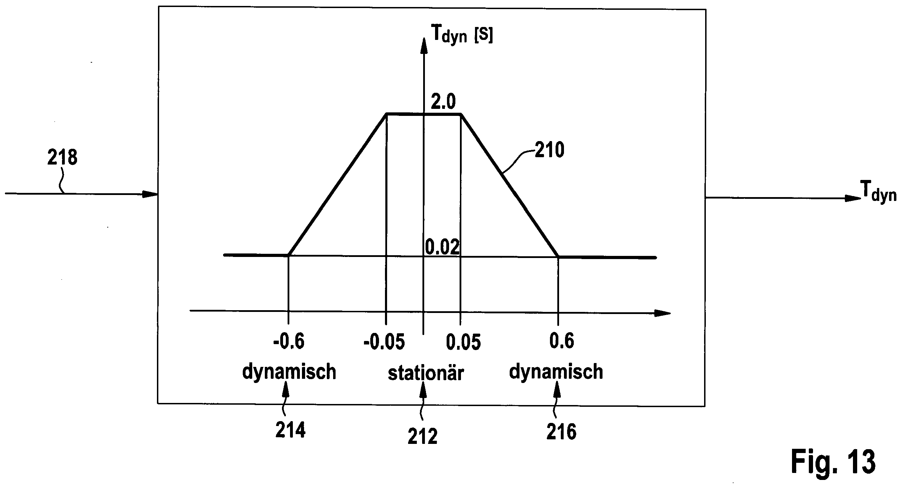

Figur 13 zeigt beispielhaft eine zweidimensionale Kurve 210, über welche die dynamische Zeitkonstante $T_{dyn}$ des Spritzbeginnfilters berechnet wird. Die Kurve ist hierbei in drei Bereiche eingeteilt, einen stationären Bereich 212 und zwei dynamische Bereiche 214 und 216. Der stationäre Bereich 212 der Kurve 210 stellt den stationären Betriebsbereich des Motors dar. Das transiente Luftmassenverhältnis 218 nimmt hierbei z. B. Werte zwischen -0,05 und 0,05 an. Im stationären Betriebsbereich des Motors soll die Zeitkonstante des Filters große Werte, z. B. 2 Sekunden, annehmen, was eine gute Filterung des Spritzbeginns bewirkt.

Im Falle eines transienten Vorgangs, z. B. einer Lastschaltung, nimmt das transiente Luftmassenverhältnis 218 betragsmäßig größere Werte an, im Falle einer Lastaufschaltung sind diese negativ und im Falle einer Lastabschaltung positiv. Für ein betragsmäßig größer werdendes Luftmassenverhältnis wird eine kleiner werdende dynamische Zeitkonstante $T_{dyn}$ festgelegt, so dass sich zwei abfallende Kurvenäste ergeben. Überschreitet das transiente Luftmassenverhältnis betragsmäßig z. B. den Wert 0,6, so wird $T_{dyn}$ auf dem sehr kleinen Wert 0,02 Sekunden konstant gehalten.

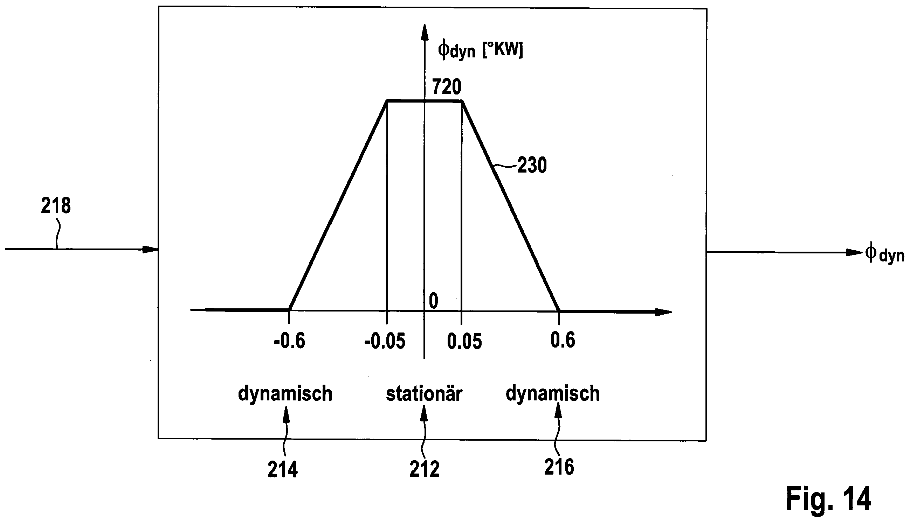

In Figur 14 ist die entsprechende Kurve 230 für die Berechnung des dynamischen Filterwinkels $\Phi_{dyn}$ detaillierter dargestellt. Der stationäre Betriebsbereich wird wiederum durch die beiden Werte - 0,05 und 0,05 des Luftmassenverhältnisses begrenzt. Der Filterwinkel beträgt in diesem Bereich 720° Kurbelwinkel. Der dynamische (instationäre) Bereich ist durch Werte des transienten Luftmassenverhältnisses definiert, die betragsmäßig größer als 0,05 sind. Mit betragsmäßig größer werdendem Luftmassenverhältnis nimmt hierbei der Filterwinkel ab, womit die Wirkung des Filters immer geringer wird. Erreicht das Luftmassenverhältnis schließlich betragsmäßig den Wert 0,6, so ist der Filterwinkel identisch 0° Kurbelwinkel, wodurch das Filter deaktiviert ist.

Mit den beiden in den Figuren 13 und 14 dargestellten Kurven wird der Spritzbeginn im Sinne der Erfindung im stationären Betrieb sehr stark gefiltert, was eine große Flexibilität bei der Auslegung der Spritzbeginn-Kennfelder erlaubt.

Im Transientbetrieb hingegen wird der Spritzbeginn nur sehr schwach, bzw. überhaupt nicht gefiltert. Dadurch wird das Lastannahmeverhalten des Motors nicht beeinträchtigt und die Emissionswerte nicht verschlechtert.

Figur 14 stellt ein Flussdiagramm zur Berechnung des Spritzbeginnes entsprechend Figur 8 dar. Nach dem Start 240 wird in Schritt S1 die Motordrehzahl berechnet. In Schritt S2 wird das Sollmoment berechnet. In Schritt S3 wird die Normluftmasse berechnet. Diese ist die Ausgangsgröße eines dreidimensionalen Kennfelds mit den Eingangsgrößen Motordrehzahl und Sollmoment. In Schritt S4 wird die aktuelle Luftmasse in Abhängigkeit des Ladeluftdrucks, der Ladelufttemperatur und des Zylindervolumens berechnet. Aus der aktuellen Luftmasse und der Normluftmasse wird in Schritt S5 das Luftmassenverhältnis berechnet. Im Schritt S6 wird das Luftmassenverhältnis durch ein PT1-Filter gefiltert.

Aus dem gefilterten Luftmassenverhältnis und dem aktuellen Luftmassenverhältnis wird in Schritt S7 das transiente Luftmassenverhältnis berechnet. Aus dem transienten Luftmassenverhältnis wird in Schritt S8 aus einer zweidimensionalen Kennlinie die dynamische Filterzeitkonstante $T_{dyn}$ berechnet. Aus der Motordrehzahl, dem Sollmoment und der virtuellen Temperatur wird in Schritt S9 der ungefilterte Spritzbeginn berechnet. In Schritt S10 wird mit Hilfe des Spritzbeginnfilters der gefilterte Spritzbeginn berechnet. Das Spritzbeginnfilter verwendet hierbei die dynamische Filterzeitkonstante $T_{dyn}$. Damit ist der Programmablaufbahn beendet 242.

Figur 16 stellt Zeitdiagramme eines Lastaufschaltvorgangs eines Generator-Motors dar. Das erste Diagramm 250 zeigt die Motordrehzahl. Zum Zeitpunkt $t_1$ wird die Last aufgeschaltet, was zu einem Einbruch der Motordrehzahl führt. Zum Zeitpunkt $t_5$ hat sich die Motordrehzahl wieder auf der Solldrehzahl (1500 l/min) eingeschwungen.

Das zweite Diagramm 252 zeigt das Sollmoment des Motors. Mit dem Einbrechen der Motordrehzahl erhöht der Drehzahlregler das Sollmoment, so dass dieses ab dem Zeitpunkt $t_1$ ansteigt. Zum Zeitpunkt $t_5$ ist auch das Sollmoment eingeschwungen.

Das dritte Diagramm 254 zeigt das transiente Luftmassenverhältnis. Im Stationärbetrieb, d. h. vor dem Zeitpunkt $t_1$, hat das transiente Luftmassenverhältnis den Wert Null. Mit dem Aufschalten der Last zum Zeitpunkt $t_1$ sinkt das aktuelle Luftmassenverhältnis, während sich das gefilterte Luftmassenverhältnis zunächst nur wenig ändert. Dies führt dazu, dass das transiente Luftmassenverhältnis negativ wird. Zu den Zeitpunkten $t_2$ und $t_6$ nimmt das transiente Luftmassenverhältnis den Wert -0,05, zu den Zeitpunkten $t_3$ und $t_4$ den Wert -0,6 an. Zum Zeitpunkt $t_7$ hat sich das transiente Luftmassenverhältnis wieder auf den stationären Wert Null eingeschwungen.

Das vierte Diagramm 256 zeigt die aus dem transienten Luftmassenverhältnis, entsprechend Figur 13 berechnete Zeitkonstante $T_{dyn}$ des Hochdruckfilters. Im Stationärbetrieb, also bis zum Zeitpunkt $t_1$, nimmt die Zeitkonstante den Wert 2,0 Sekunden an. Ab dem Zeitpunkt $t_2$ wird die Zeitkonstante kleiner, da das transiente Luftmassenverhältnis zu diesem Zeitpunkt den Wert -0,05 unterschreitet. Von Zeitpunkt $t_3$ bis Zeitpunkt $t_4$ ist das transiente Luftmassenverhältnis kleiner oder gleich dem Wert -0,6. Damit nimmt die Zeitkonstante des Spritzbeginnfilters in diesem Zeitbereich entsprechend Figur 13 den Wert 0,02 Sekunden an. Zum Zeitpunkt $t_6$ überschreitet das transiente Luftmassenverhältnis wieder den Wert -0,05 und pendelt sich anschließend auf dem Wert Null ein. Dies führt dazu, dass die Zeitkonstante des Spritzbeginnfilters entsprechend Figur 13 vom Zeitpunkt $t_4$ bis zum Zeitpunkt $t_6$ vom Wert 0,02 Sekunden bis auf den Wert 2,0 Sekunden ansteigt und in der Folge mit diesem Wert identisch ist.

Das fünfte Diagramm 258 zeigt den Spritzbeginn vor und nach dem Spritzbeginnfilter für denjenigen Fall, dass eine dynamische Zeitkonstante entsprechend Figur 13 für das Spritzbeginnfilter verwendet wird. Zum Vergleich ist mit der gestrichelten Linie ein Verlauf des Spritzbeginns dargestellt für den Fall, dass eine konstante Zeitkonstante von 2,0 Sekunden verwendet wird. Im Stationärbetrieb vor dem Zeitpunkt $t_1$ hat der Spritzbeginn jeweils den Wert 4,0° Kurbelwinkel. Mit dem Aufschalten der Last und dem gleichzeitigen Einbruch der Motordrehzahl beginnt der Spritzbeginn jeweils zu steigen. Der Spritzbeginn vor Spritzbeginnfilter erreicht zum Zeitpunkt $t_5$ seinen stationären Endwert von 12° Kurbelwinkel, da zu diesem Zeitpunkt Motordrehzahl und Sollmoment auf ihren stationären Endwerten eingeschwungen sind. Der Spritzbeginn nach Filter erreicht den stationären Endwert zum Zeitpunkt $t_7$, wenn die dynamische Zeitkonstante $T_{dyn}$ verwendet wird (punktierte Linie) .

Wird eine konstante Zeitkonstante von 2,0 Sekunden verwendet, so erreicht der Spritzbeginn erst zum Zeitpunkt $t_9$ seinen stationären Endwert. Man erkennt, dass eine dynamische Filterzeitkonstante ein besseres Übergangsverhalten des Spritzbeginns ermöglicht als eine statische, konstante Filterzeitkonstante, ohne dass eine Verschlechterung des stationären Filterverhaltens in Kauf genommen werden muss.

Mit dem vorgestellten Verfahren sind, zumindest in einigen der Ausführungen, eine Reihe von Vorteilen zu erzielen. So ist ein besseres Übergangsverhalten des Spritzbeginns im Transientbetrieb möglich. Auf diese Weise können die Emissionen bei transientem Motorbetrieb reduziert werden. Weiterhin ist ein besseres Beschleunigungsbzw. Lastannahmeverhalten des Motors, insbesondere bei ansteigendem Spritzbeginn, zu erreichen, da der Spritzbeginn in diesem Fall schneller ansteigt und ein früher Spritzbeginn für das dynamische Verhalten zweckdienlich ist.

Weiterhin ist zu beachten, dass der Versuchsingenieur wesentlich mehr Freiheiten beim Auslegen der Spritzbeginn-Kennfelder hat, da steile Gradienten im Kennfeld nicht zu Instabilitäten führen. Außerdem kann im Stationärbetrieb ein Filter mit sehr guter Filterwirkung, nämlich ein langsames Filter, eingesetzt werden, ohne dass der Transientbetrieb beeinträchtigt wird.

**Patentansprüche**

1. Verfahren zum Betreiben einer Brennkraftmaschine, bei dem ein Spritzbeginn ausgehend von einem Normspritzbeginn durch ein erstes und zweites Filter berechnet wird, wobei zumindest einer der Filterparameter abhängig vom Betriebszustand der Brennkraftmaschine gewählt wird, wobei für das erste Filter der Filterparameter in Abhängigkeit eines transienten Luftmassenverhältnisses berechnet wird, welches aus einem aktuellen Luftmassenverhältnis und einem gefilterten Luftmassenverhältnis berechnet wird, wobei das Luftmassenverhältnis in Abhängigkeit von aktueller Luftmasse zur Normluftmasse berechnet wird, wobei die Normluftmasse mittels der Motordrehzahl und des Sollmoments berechnet wird, wobei das zweite Filter ein PT1-Filter ist und eine Filterzeitkonstante des zweiten Filters vom Gradienten eines Spritzbeginns abhängt.

2. Verfahren nach Anspruch 1, **dadurch gekennzeichnet, dass** das erste Filter ein PT1-Filter ist und als Filterparameter für das erste Filter eine Filterzeitkonstante verwendet wird.

3. Verfahren nach Anspruch 1, **dadurch gekennzeichnet, dass** das erste Filter ein Mittelwertfilter ist und als Filterparameter für das erste Filter ein Filterwinkel verwendet wird.

4. Verfahren nach Anspruche 1, **dadurch gekennzeichnet, dass** der Filterparameter des ersten Filters so eingestellt wird, dass sich für einen Transientbetrieb ein geringes Verzögerungsverhalten ergibt.

5. Verfahren nach Anspruch 1, **dadurch gekennzeichnet, dass** der Filterparameter des ersten Filters so eingestellt wird, dass sich für einen Stationärbetrieb ein starkes Verzögerungsverhalten ergibt.

**Claims**

1. Method for operating an internal combustion engine, in which an injection start is calculated by a first and second filter, starting from a standard injection start, wherein at least one of the filter parameters is selected as a function of the operating state of the internal combustion engine, wherein, for the first filter, the filter parameter is calculated as a function of a transient air mass ratio which is calculated from a current air mass ratio and a filtered air mass ratio, wherein the air mass ratio is calculated as a function of the current air mass flow with respect to the standard air mass flow, wherein the standard air mass flow is calculated by means of the rotational speed of the engine and the setpoint torque, wherein the second filter is a PT1 filter, and a filter time constant of the second filter depends on the gradient of an injection start.

2. Method according to Claim 1, **characterized in that** the first filter is a PT1 filter and a filter time constant is used as the filter parameter for the first filter.

3. Method as claimed in Claim 1, **characterized in that** the first filter is a mean value filter and a filter angle is used as the filter parameter for the first filter.

4. Method as claimed in Claim 1, **characterized in that** the filter parameter of the first filter is set in such a way that a small delay behavior occurs for a transient operating mode.

5. Method as claimed in Claim 1, **characterized in that** the filter parameter of the first filter is set in such a way that a strong delay behavior occurs for a steady-state operating mode.

**Revendications**

1. Procédé de fonctionnement d'un moteur à combustion interne, dans lequel un début d'injection est calculé à partir d'un début d'injection standard par un premier et un deuxième filtre, l'un au moins des paramètres de filtre étant sélectionné en fonction de l'état de fonctionnement du moteur à combustion interne, le paramètre de filtre du premier filtre étant calculé en fonction d'un rapport de masse d'air transitoire qui est calculé à partir d'un rapport de masse d'air réelle et d'un rapport de masse d'air filtré, le rapport de masse d'air étant calculé en fonction de la masse d'air réelle par rapport à la masse d'air standard, la masse d'air standard étant calculée au moyen de la vitesse de rotation de moteur et du couple de consigne, le deuxième filtre étant un filtre PT1 et une constante de temps de filtre du deuxième filtre dépendant du gradient d'un début d'injection.

2. Procédé selon la revendication 1, **caractérisé en ce que** le premier filtre est un filtre PT1 et **en ce qu'**une constante de temps de filtre est utilisée comme paramètre de filtre du premier filtre.

3. Procédé selon la revendication 1, **caractérisé en ce que** le premier filtre est un filtre de valeur moyenne et **en ce**

**qu'**un angle de filtre est utilisé comme paramètre de filtre du premier filtre.

4. Procédé selon la revendication 1, **caractérisé en ce que** le paramètre de filtre du premier filtre est réglé de façon à obtenir un comportement à faible retard pour un fonctionnement transitoire.

5. Procédé selon la revendication 1, **caractérisé en ce que** le paramètre de filtre du premier filtre est réglé de façon à obtenir un comportement de forte décélération pour un fonctionnement stationnaire.

Fig. 1

Fig. 2
(Stand der Technik)

Fig. 3
(Stand der Technik)

Fig. 4

Fig. 5

EP 2 941 557 B1

Fig. 6

Fig. 7

Fig. 8

Fig. 9

Fig. 10

Fig. 11

EP 2 941 557 B1

Fig. 12

Fig. 13

EP 2 941 557 B1

EP 2 941 557 B1

218

$\phi_{dyn}$ [°KW]

720

230

0

-0.6    -0.05    0.05    0.6

dynamisch    stationär    dynamisch

214    212    216

$\phi_{dyn}$

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120042850 A1

- US 7293556 B2